# EUROPEAN PATENT APPLICATION

(11) **EP 3 410 280 A1**
(43) Date of publication of application: **05.12.2018**
(21) Application number: 18167419.3
(22) Date of filing: 09.06.2011
(51) Int. Cl.: G06F 3/046, G06F 3/0346, G06F 3/0354

(54) **OBJECT ORIENTATION DETECTION WITH A DIGITIZER**

(30) Priority: 11.06.2010 US 35408110 P
(62) Divisional of application: 11731136.5
(71) Applicant: Microsoft Technology Licensing, LLC, Redmond, WA 98052 (US)
(72) Inventor: GELLER, Ilan, 4281500 Pardesia (IL); STERN, Yuval, 4050000 Even-Yehuda (IL); KALMANOVICH, Alex, 5831269 Holon (IL)
(74) Representative: CMS Cameron McKenna Nabarro Olswang LLP

(57) **Abstract**

The present invention relates to a digitizer controller comprising: a circuit configured to: sample outputs from a plurality of column sensor lines and from a plurality of row sensor lines of a digitizer sensor to detect a first signal emitted from a first transmitter and a second signal emitted from a second transmitter, wherein the first transmitter and the second transmitter are fixed on a stylus and wherein the first transmitter is displaced from the second transmitter by a pre-defined distance; determine based on the outputs a first area on the digitizer sensor that received the first signal and a second area on the digitizer sensor that received the second signal; select first coordinates within the first area; select second coordinates within the second area; determine distance along the digitizer sensor between the first coordinates and the second coordinates; and determine angle of the stylus with respect to the digitizer sensor based on comparing the pre-defined distance to the distance determined along the digitizer sensor.

## Description

### TECHNOLOGICAL FIELD

The present application is related to touch screens in general, and to methods for determining the usage parameters of a stylus used with a digitizer system, in particular.

### BACKGROUND

Touch technologies are commonly used as input devices for a variety of products. The usage of touch devices of various kinds is growing sharply due to the emergence of new mobile devices such as Personal Digital Assistants (PDA), tablet PCs and wireless flat panel displays (FPD). Some of these devices are not connected to standard keyboards, mice or like input devices, which are deemed to limit their mobility. Instead there is a tendency to use touch input technologies of one kind or another. A stylus or a finger may be used as a device for user interaction with the underlying computing platform.

US Patent No. 6,690,156 entitled "Physical Object Location Apparatus and Method and a Platform using the same" and US Patent Publication No. 20040095333 entitled "Transparent Digitizer" both of which are assigned to N-trig Ltd., the contents of both which are incorporated herein by reference, describe an electro-magnetic method for locating physical objects on a flat panel display (FPD) and a transparent digitizer that can be incorporated into an electronic device, typically by being placed over the display panel. The digitizer sensor includes a matrix of vertical and horizontal conducting lines to sense an electric signal. Positioning the physical object at a specific location on the digitizer provokes a signal whose position of origin may be detected.

U.S. Patent Application Publication No. 20040155871 entitled "Touch Detection for a Digitizer" assigned to N-trig Ltd, which is incorporated herein by reference, describes a digitizing tablet system capable of detecting position of physical objects and/or fingertip touch using the same sensing conductive lines. Typically, the system includes a transparent sensor overlaid on an FPD. The digitizer's sensor includes a matrix of vertical and horizontal conducting lines that sense an electric signal. Touching the digitizer in a specific location provokes a signal whose position of origin may be detected.

U.S. Patent Application Publication No. 20060097991, entitled "Multipoint TouchScreen" assigned to Apple Computers, the contents of which is incorporated herein by reference, describes a touch panel having a transparent capacitive sensing medium configured to detect multiple touches or near touches that occur at the same time and at distinct locations in the plane of the touch panel and to produce distinct signals representative of the location of the touches or near touches on the plane of the touch panel for each of the multiple touches or near touches.

U.S. Patent Application Publication No. 20080012835 entitled "Hover and Touch Detection for a Digitizer" assigned to N-trig Ltd, which is incorporated herein by reference, describes a method for detecting a hover event, e.g., detecting an area of the digitizer to which a hover event is closest, as well as determining the height of the hover event.

A stylus of any kind, whether it is powered by an excitation coil or by a built-in power source, may be used in conjunction with a digitizer for enabling a user to introduce data to the underlying computing platform. Using a stylus, the user may perform any operation traditionally done using input devices such as a mouse or a keyboard.

The stylus can be used for touching objects on the screen, thus selecting them or performing operations upon them, for example opening a document or scrolling within a window. By using longer gestures, the stylus can be used for entering data such as handwritten text or graphical shapes.

Yet another usage of a stylus relates to performing activities within the underlying computing platform by making gestures which are detected and recognized by the underlying computing platform, such as making an "X"-like gesture for closing the active window.

As described above, some systems may also recognize hover events, in which the stylus does not touch the digitizer but is at some distance away from the digitizer.

U.S. Patent Application No. 12/643,004 entitled "Digitizer, Stylus and Method of Synchronization Therewith" assigned to N-trig Ltd, which is incorporated herein by reference, describes a digitizer that can operate with an autonomous asynchronous transmitting stylus, which may be self powering, for example battery operated.

There is still a need in the art for obtaining additional data related to the stylus or its usage by the user. The data can be transferred to the underlying computing platform for better utilizing the stylus for existing and new applications.

### SUMMARY OF THE INVENTION

An aspect of some exemplary embodiments of the invention relates to determining aspects such as spatial aspects of a stylus being used in conjunction with a digitizer to introduce input into a computing platform. The aspects may include tilt angle or rotation angle of the stylus, or the angle at which the stylus is held relatively to an axis of the digitizer sensor.

### BRIEF DESCRIPTION OF THE DRAWINGS

The figures are for illustration purpose and do not indicate any scale.
Figure 1A is a simplified block diagram of a digitizer system according to an exemplary embodiment of the present invention;
Figure 1B is a simplified block diagram of a digitizer stylus according to an exemplary embodiment of the present invention;
Fig. 2 is a schematic illustration of a stylus with two transmitters emitting signals or radiations absorbed by a sensor, in accordance with the disclosure;
Figs. 3A-3D are schematic illustrations of side and top projections of a stylus main axis and two transmitters, in accordance with the disclosure;
Fig. 4 is a schematic illustration of a stylus being rotated;
Figs. 5A-5E are schematic illustrations of side and top projections of a stylus main axis and three transmitters, one of which is placed at or near the tip of the stylus, in accordance with the disclosure;
Figs. 5F-5H are schematic illustrations of side and top projections of a stylus main axis and three transmitters, none of which is placed at or near the tip of the stylus, in accordance with the disclosure;
Fig. 6 is a schematic illustration of a stylus in two different angles relatively to the sensor;
Fig. 7 is a flowchart of the main steps in a method for determining the tilt angle of a stylus, in accordance with the disclosure; and
Fig. 8 is a flowchart of the main steps in a method for determining the tilt and rotate angle of a stylus, in accordance with the disclosure.

### DETAILED DESCRIPTION OF EXEMPLARY EMBODIMENTS

In the following description, exemplary, non-limiting embodiments of the invention incorporating various aspects of the present invention are described. For purposes of explanation, specific configurations and details are set forth in order to provide a thorough understanding of the embodiments. However, it will also be apparent to one skilled in the art that the present invention may be practiced without the specific details presented herein. Furthermore, well-known features may be omitted or simplified in order not to obscure the present invention. Features shown in one embodiment may be combined with features shown in other embodiments. Such features are not repeated for clarity of presentation. Furthermore, some unessential features are described in some embodiments.

The disclosure relates to a substantially transparent sensor attached to a display associated with a computing platform, and to a stylus used by a user to point at locations of the sensor and thus introduce data to the computing platform.

Some embodiments of the disclosure relate to a stylus which emits two or more signals, radiation types or energies, wherein each is emitted or transmitted from a different location of the stylus. In some embodiments, one of the signals is transmitted from an area of the stylus that is at or close to the distal end of the stylus, i.e., the tip of the stylus with which the user touches the sensor or hovers near the sensor, the signal referred to as a touch signal, and the other signal or signals are transmitted from one or more areas of the stylus closer to the proximal end of the stylus, i.e., closer to the other end of the stylus than the area from which the touch signal is transmitted, and are referred to as hover signal or signals. The two or more signals may be transmitted so that both are received simultaneously, alternately, or intermittently by a digitizer system.

Using the two or more signals, two or more locations are determined on the sensor, each indicating the projection of the respective transmitter. If one transmitter is located at or near the tip of the stylus, then the first location is indicative of the point at which the stylus tip touched the digitizer, or the point of the digitizer closest to where the tip is hovering. The second and optionally additional locations are indicative of the projection of the other transmitter or transmitters over the digitizer, i.e., the location at the sensor which is closest to the component or components transmitting the hover signal. By determining the geometric relations between the two or more locations, several parameters can be determined, including the tilt of the stylus i.e. the angle between the stylus and the normal to the sensor plan, the rotation of the stylus, the roll or rotation angle of the stylus around its main axis, and the angle at which the user holds the stylus relatively to a line such as an axis of the digitizer.

The way a user holds a stylus is often significantly constant or is at least within known boundaries, meaning for example that the angle at which a particular user holds the stylus relatively to the normal to the sensor, or the angle between the stylus projection and the axes of the sensor, are often within a small range relatively to the range of angles presented by different users.

Thus, these angles may characterize the user, and may be used for a variety of purposes, such as but not limited to signature verification of a user of the computing platform or for graphologycal analysis. In a signature verification application, multiple parameters related to the way a user holds and uses the stylus are measured on a training or registration session and stored on a persistent storage. Later, when it is required to verify the identity of a person, these parameters are measured and compared against the stored values. If the difference between the stored values and the measured values is below a threshold, the identity of the user is verified.

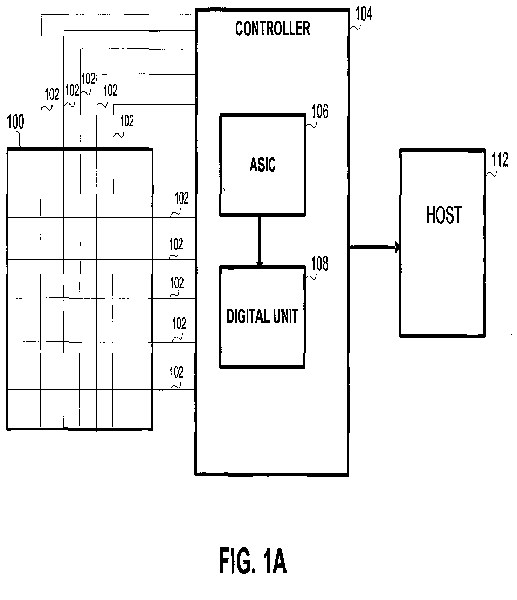

Reference is now made to Fig. 1A showing an exemplary simplified block diagram of a digitizer system in accordance with some embodiments of the present invention.

The preferred platform for the present invention is a transparent digitizer for a mobile computing device that uses a flat bed panel (FPD) screen. The mobile computing device can be any device that enables interactions between the user and the device. Examples of such devices are - Tablet PCs, pen enabled lap-top computers, personal digital assistants (PDAs) or any hand held devices such as palm pilots or mobile phones. Optionally, the preferred application for the present disclosure is a transparent digitizer that uses an FPD screen for entertainment applications, such as a playing board or a tabletop computer.

According to some embodiments of the present invention, the digitizer system comprises a grid-based sensor 100, which is optionally transparent, and which is typically overlaid of an FPD, such as liquid crystal display (LCD).

According to some embodiments of the invention, a sensor array is manufactured on a substrate, which is typically a transparent material such as glass or plastic. Optionally, sensor array is comprised of two transparent PET foils, each patterned with conductive lines. Optionally, the sensor array is comprised of two transparent glass substrates, each patterned with conductive lines 102. Optionally, sensor array is comprised of a transparent glass substrate and a transparent PET foil, each patterned with conductive lines 102. Optionally, conductive lines 102 are made of ITO or other transparent organic conductors. The transparent substrates (such as: glass, foil) are combined to create a grid of conductive lines 102. Optionally, a protective layer is used on top of the foils for protecting the sensor. All conductive lines 102 are connected to controller 104. It will be appreciated that the present invention is not limited to the described sensor configuration, but any other sensor configuration can be used, and in particular a sensor array comprising a single substrate on which conductive lines 102 are placed.

Controller 104, optionally comprising or mounted upon a printed circuit board (PCB), comprises Application-Specific Integrated Circuit (ASIC) 106, which comprises circuitry to process and sample the output into a digital representation. Typically ASIC 106 includes both analog and digital components. According to some embodiments of the present invention, the digital output signal is forwarded to a digital unit 108, e.g. digital ASIC unit, for further digital processing. The outcome of the digital processing performed by digital unit 108 is typically the position of the user input, e.g. stylus and/or finger tip. The outcome, once determined, is forwarded to a host computer112 via interface for processing by the operating system or any current application.

Typically, ASIC unit 106 is connected to outputs of the various conductive lines 102 in grid sensor 100 and functions to process the received signals at a first processing stage. In some embodiments, ASIC unit 106 includes an array of differential amplifiers to amplify the sensor's signals. Additionally, ASIC unit 106 includes one or more filters to remove irrelevant frequencies, for example filtered prior to sampling. The signal is then sampled by an Analog to Digital Converter (A/D), filtered by a digital filter and forwarded to digital ASIC unit 106, for further digital processing.

According to some embodiments of the disclosure, digital unit 108 reads the sampled data, processes it and determines the position of the physical objects, such as stylus, and/or finger touch. The calculated position is sent to the host computer via interface. According to some embodiments, digital unit 108 is to produce and manage a triggering pulse to at least one of the conductive line for finger touch detection. In some embodiments, digital unit 108 produces and manages a triggering pulse to be provided to an excitation coil (not illustrated) that surrounds the sensor arrangement and the display screen. The excitation coil provides a triggering pulse (in the form of an electric or electromagnetic field) that provides energy to an energy pick-up circuit in the stylus. An exemplary embodiment of a stylus comprising an energy pick up circuit is detailed explained in incorporated US Patent Application Publication No. 20080128180.

The digitizer detects the position of at least one physical object in a very high resolution and update rate. The physical object can either be a stylus, a game piece, user's finger (i.e. touch) or any conductive object touching the screen. The physical object may be used for pointing, painting, writing (hand write recognition) and any other activity that is available for user interaction with the device. The system can detect single or multiple finger touches. The system can detect several electromagnetic objects, either separately or simultaneously. Furthermore, the touch detection may be implemented simultaneously with stylus detection.

In other embodiments, no excitation coil is provided and the stylus is self powering.

In the description below and in particular when referring to detected locations, the terms digitizer and sensor are used interchangeably, and refer to the plan on which the stylus is used.

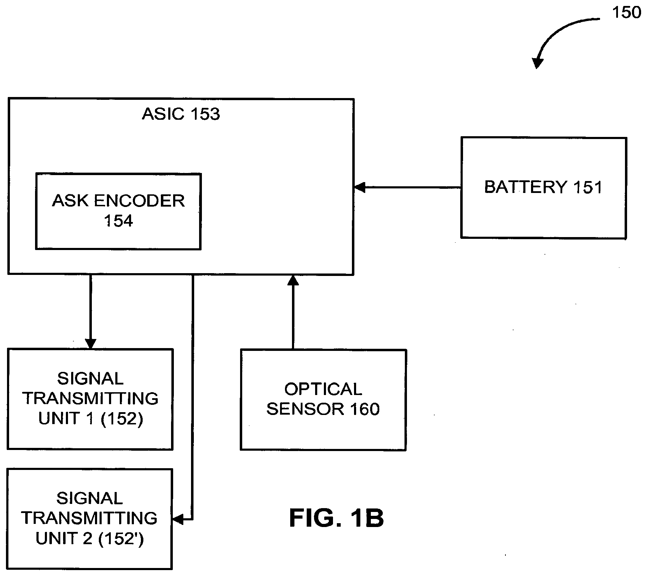

Reference is now made to Fig. 1B showing an exemplary simplified block diagram of a digitizer stylus, generally referenced 150 in accordance with some embodiments of the present disclosure. According to some embodiments, stylus 150 comprises a battery 151 to function as the stylus energy source. Optionally, a 4A Alkaline battery is used. Optionally, a rechargeable battery is used. Optionally, the stylus contains an energy pick-up circuit and is charged by an excitation coil surrounding the sensor array. Optionally, the stylus further comprises a voltage stabilizer to ensure that the voltage provided is constant over time. Typically, the stylus generates an AC signal to be detected by sensor conductive lines.

According to some embodiments, the stylus comprises a signal transmitting unit 1 (152), and one or more signal transmitting units 2 (152') to transmit signals. Typically, one of signal transmitting units 152 or 152' is placed at or near the stylus tip, i.e., is distal, and may be referred to as a position tip. The other transmitters or transmitters are placed at a distance therefrom, i.e., is proximal, and may be referred to as angle determination tips. In some embodiments all transmitters are placed along the main axis of the stylus which connects the stylus tip with the opposite side, such that the signal or radiation emitted by the transmitting units and absorbed by the sensor are unchanged when the stylus is rotated around its axis. When the stylus is used, the exact position of the stylus tip and the projections of the angle determination tips are determined by the detector, which processes the signals sensed by the sensor. According to some embodiments, the stylus comprises an ASIC unit 153. Typically, the stylus electronic circuit is formed on a PCB unit and the ASIC unit 153 is mounted on the stylus PCB.

In a preferred embodiment, the stylus is pressure sensitive (i.e. tip pressure sensitivity). The pressure sensitivity is accomplished by a pressure sensitive mechanism. Optionally, a user applies pressure to the stylus by pressing the tip into the digitizer surface. Optionally, the pressure applied is in the range of 0-2K gram-force, e.g. 0-350 gram-force. Typically, the stylus supports full "mouse" functioning, e.g. Tip switch as mouse left click, Side switch as mouse right click and include cursor tracking when stylus is hovering above the screen. Optionally, the stylus further comprises an eraser side switch. Typically, Amplitude Shift Keying (ASK) modulation is used to encode pressure (i.e. the amount of pressure applied on the stylus tip), side switches and additional information. Optionally, the additional information comprises: stylus ID, color, other external switches, eraser etc. According to some embodiments, ASIC unit 153 comprises an ASK Encoder unit 154. ASK Encoder unit 154 is responsible for generating the ASK modulated signal. Optionally, other modulation is used, e.g. frequency modulation or phase modulation.

Optionally, a stylus comprising a wave generating oscillator section; a power supply section powering the oscillator section, and an energy pick-up circuit which supplies energy to the power supply section (as described in US Patent Application Publication No. 20080128180) is used.

In an exemplary embodiment of the present invention, the stylus comprises an optical sensor 160. The stylus pressure sensitive mechanism is achieved by sensing the movement and/or displacement of the stylus tip by optical sensor 160. Optionally, the movement and/or displacement of the stylus tip itself is measured. In an exemplary embodiment, the distance (i.e. stylus tip movement) measured is in the range of 0-500 µm. e.g. 0-200µm. Optionally, the movement and/or displacement of a rod connected to the stylus tip are measured, so that the rod transfers the force applied on the stylus tip. Typically, the rod is made of a non-conductive material. Optionally, the rod is made of a conductive material. Optionally, a carbon rod is used.

According to some embodiment, when no pressure is provided on stylus tip, the stylus is in 'hover state'. The initial pressure causes the stylus to switch to 'tip state', i.e. mouse left click. It is required that an initial small force will cause a significant movement of the stylus tip to indicate the switching from 'hover state' to 'tip state'. The additional pressure applied on stylus tip results in a thicker drawn line. An exemplary mechanical structure of a stylus that supports this pressure mechanism is detailed explained in incorporated US Patent Application Publication No. 20100051356, incorporated herein by reference. Optionally, an initial pressure, e.g. 15 gram-force, causes 50µm movement of stylus tip. The additional pressure applied (e.g. 350gram-force) causes a 150µm movement of stylus tip.

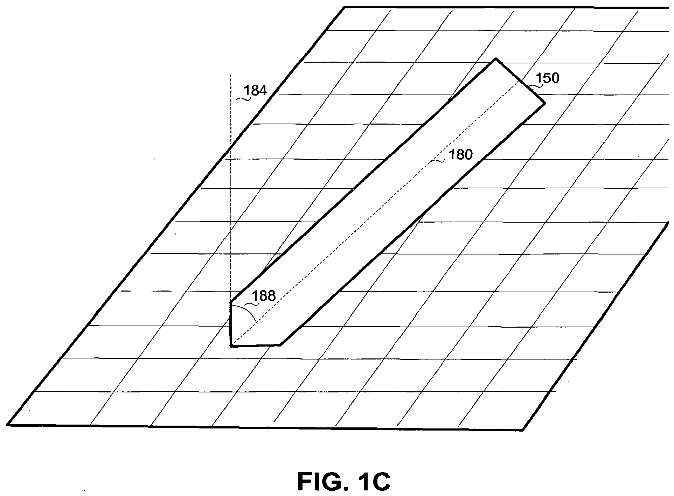

Referring now to Fig.1C, showing a schematic illustration of the tilt of the stylus. Stylus 150 is used with sensor 100. Tilt angle 188 can be defined as the angle between main axis 180 of stylus 150, and normal 184 to the plan of sensor 100.

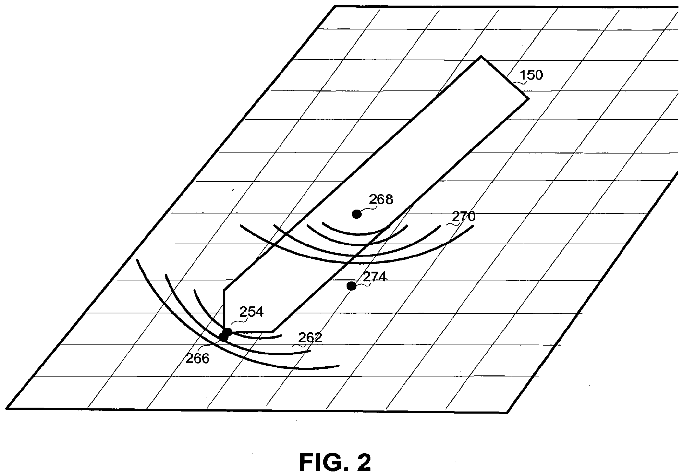

Referring now to Fig. 2, showing a schematic and exemplary illustration of a stylus for enabling measurement of the tilt angle of the stylus. Stylus 150 comprises one or more oscillators and two transmitters. First transmitter 254, corresponding to transmitter 152 of Fig. 1B, and is located at or in close proximity to the tip of stylus 150, and second transmitter 268, corresponding to transmitter 152' of Fig. 1B, and is located at a distance from first transmitter 254, towards the proximal end of stylus 150.

It will be appreciated that the transmissions of first transmitter 254 and second transmitter 268 can differ in any one or more of their characteristics, including frequency; time, i.e., each transmitter transmits at different parts of each time frame; or phase.

When stylus 150 is used by a user, and transmitters 254 and 268 transmit signals or radiation, the coordinates of the location on sensor 100 corresponding to each transmitter, being the coordinates of location 266 for transmitter 254, and location 274 to transmitter 268 can be determined, as disclosed for example in U.S and Patent Application Publication No. 20080012835 entitled "Hover and Touch Detection for a Digitizer" assigned to N-trig Ltd, and in U.S No. 7,292,229 entitled "Transparent Digitizer" assigned to N-trig Ltd, both of which are incorporated herein by reference.

In some embodiments, each detected location is the location on sensor 100 which is closest to the corresponding transmitter.

In some embodiments, location 266 is recognized as a touch point by a touch signal, and location 274 is recognized in accordance with a hover signal or radiation emitted by transmitter 268.

If the stylus tip touches sensor 100, then the coordinates of location 266 are identical to the touching point of stylus 150, otherwise both locations 266 and 274 are determined as hover locations.

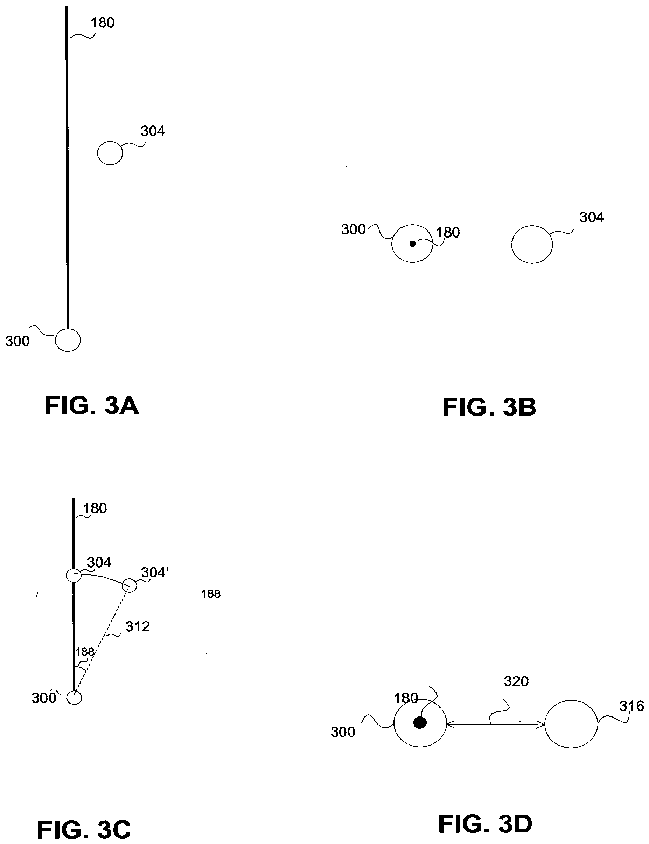

Referring now to Figs. 3A-3D, showing various views or projections of various embodiments of a stylus with two transmitters.

It will be appreciated that a stylus in accordance with the disclosure has a first transmitter, located at or near the tip of the stylus, the first transmitter optionally named position tip, which provides the location of the tip. A second transmitter, named tilt tip or angle determination tip is located at different latitude then the position tip. It will be appreciated that the two transmitters should be electrically isolated from each other. The tilt tip can be located along the main axis of the stylus, on its perimeter, or anywhere in-between. In some embodiments, an isolated round disk can be placed around the main axis of the stylus, and the tilt tip can be located on the perimeter of the disk. This embodiment is easier to route than the on-axis embodiment, in which it is required to isolate the two transmitters from each other. An off-axis embodiment can also be implemented using a coaxial cable surrounding the main axis of the stylus, and placing the tilt tip on the conducting external layer of the cable. However, in such embodiment, the energy transmitted by the tilt tip will be seen as if it is transmitted from the main axis.

Referring now to Figs. 3A and 3B, showing schematic side and top views, respectively, of a stylus with an off-axis tilt tip. Figs. 3A and 3B main axis 180 of the stylus having thereon position tip 300, and tilt tip 304 which is placed further towards the boundary of the stylus.

Referring now to Figs. 3C and 3D, showing schematic side and top views, respectively, of a stylus with an on-axis tilt tip. Fig. 3C is a side view of a stylus, showing main axis 180 of the stylus when the stylus is perpendicular to the sensor, position tip 300 and tilt-tip 304. When the stylus is tilted, tilt-tip 304 is shown at location 304', such that segment 312 connecting position tip 300 and location 304' creates angle α (188) with the normal to the sensor. The distance between position tip 300 and tilt-tip 304 is denoted by H.

Fig. 3D shows a schematic top view of a stylus with on-axis tilt tip. When the stylus is perpendicular to the sensor, the projections of the two tips coincide. When the stylus is tilted, distance 320, denoted L, is formed between the projected locations of position tip 300 and tilt-tip 304.

Once the sensor captures the location of the two tips when the stylus is tiled, the distance between them can be determined, and then the tilt angle α (188) is determined as the inverse cosine of L/H.

It will be appreciated that the same calculation can be used for on-axis and off-axis implementations.

It will be further appreciated that the tilt angle can also be determined using the height the tilt tip, for example in accordance with the intensity of the radiation emitted by the two transmitters and absorbed by the sensor. The height of the position tip can be determined as well, although it is clear that when the stylus touches the sensor, this height is zero.

The tilt angle can then be determined as the inverse sine of the ratio between the height difference and the distance between the two transmitters along the stylus.

A combination, for example the average of the two geometric measures can be used in order to increase accuracy of the tilt determination.

It will be appreciated by a person skilled in the art that the longer the distance between the first and the second transmitters, the higher the accuracy of determining the tilt angle. However, longer distance between the two transmitters necessitates higher levels of radiation. The tradeoff between the two factors depends on the importance of the exact verification, and the levels of radiation the user is willing to be exposed to. An off-axis embodiment can also be used for determining the rotation angle of the stylus around its main axis, which can be used for implementing certain features related to drawing, such as changing the line thickness. For determining the rotation, two rotation tips are used in a similar manner to the tilt tip of the tilt operation.

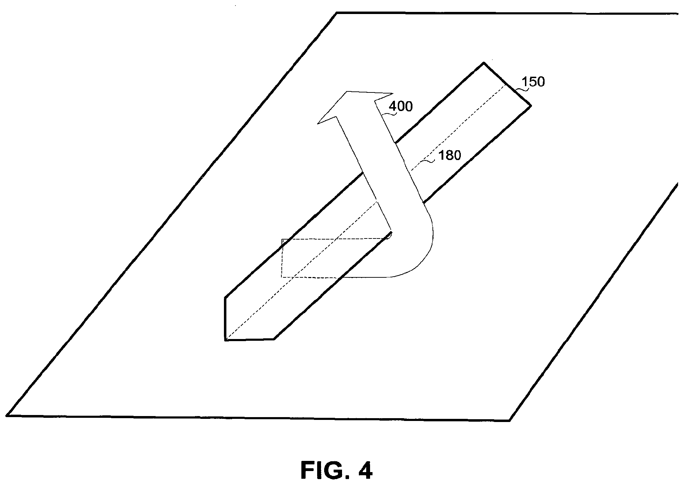

Referring now to Fig. 4, illustrating the rotation operation, also referred to as roll operation. Stylus 150 used with sensor 100 is rotated around its main axis 180which may also be its symmetry axis. The rotation is exemplified by arrow 400. Although the tip of stylus 150 may move, this is not related to the rotation.

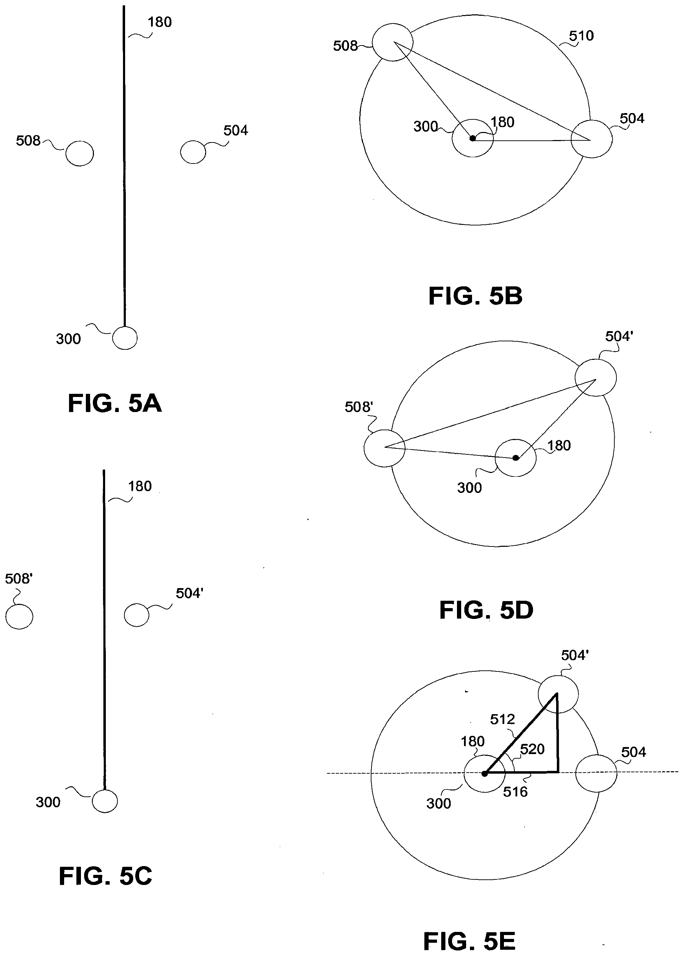

Referring now to Figs. 5A-5E showing various projections of various embodiments of a stylus with three transmitters.

The stylus has a position tip similar to the position tip shown in Figs 3A-3D. The stylus further comprises two rotation tips, located off-axis on the stylus, similarly to the off-axis tilt tip shown in Figs. 3A and 3B above.

It will be appreciated that the three transmitters should be isolated from each other.

Referring now to Figs. 5A and 5B, showing schematic views of the main axis and the tips of a stylus with two off-axis rotation tips. Main axis 180 of the stylus has thereon at or near its distal end position tip 300. In an exemplary embodiment, a first angle determination tip 504 and a second angle determination tip 508 are placed on the perimeter of the stylus at a predetermined height relatively to the position tip. Fig. 5A is a side view and Fig. 5B is a top view, showing main axis 180, position tip 300, first angle determination tip 504 and second angle determination tip 508, when the stylus is at its initial state, and wherein the stylus is not tilted. Circle 510, which is not part of the view but is a virtual circle, has its center on the point at which position tip 300 and main axis 180 touch the sensor. Circle 510 also passes through first angle determination tip 504 and second angle determination tip 508. The radius of circle 510 is denoted by R, which is equal to the distance between any of first angle determination tip 504 and second angle determination tip 508 and main axis 180.

Fig. 5C shows a side view of the main axis 180, position tip 300, first angle determination tip 504' and second angle determination tip 508' after the stylus was subject to rotation in an angle β, while the stylus has not been tilted.

Fig. 5D shows a top view of main axis 180, first angle determination tip 504' and second angle determination tip 508' after the stylus was subject to rotation in an angle β, while the stylus has not been tilted.

Referring now to Fig. 5E, which is a synthetic top view, showing main axis 180, first angle determination tip 504 prior to the rotation, and first angle determination tip 504' after the rotation. Rotation angle β (520) can be determined as the inverse cosine of dₓ/R, wherein:
dₓ is the distance between main axis 180 and the projection of first angle determination tip 504' after the rotation, on the line connecting main axis 180 and the projection of the first angle determination tip 504 before the rotation.

If the stylus is rotated while tilted, a number of methods can be used for determining the tilt and rotate angles. One method is keeping a matrix in which: 1. Each row represents the coordinates of the first rotation tip relatively to the position tip, the number of rows depending on the desired resolution. 2. Each column represents the coordinates of the second rotation tip relatively to the position tip. 3. Each entry contains the stylus tilt angle and rotation angle at which the respective values will be yielded. Using this method, the tilt and rotate angles are retrieved in a very efficient manner from the combination of the projection locations of the first and second angle determination tips and the location of the position tip.

The matrix can be created at the time the stylus is designed or once a prototype is available, since its entries depend upon the location of the angle determination tips relatively to the position tip and relatively to each other. The matrix values can be retrieved either by controller 104 or by host 112 in accordance with the position tip projection locations.

Yet another usage parameter that can be yielded by the two angle determination tips relates to the angle between the projection of the stylus and a known line of the digitizer, such as the X axis of the digitizer. This parameter can be entered as a third value within each entry in the matrix discussed above.

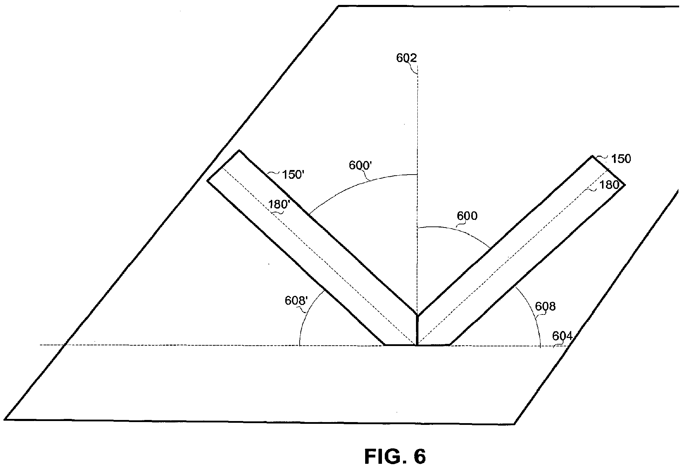

Referring now to Fig. 6, showing this angle. The two styli 150 and 150' have the same angle 600 and 600' relatively to normal 602 to digitizer 100. However, their angles 608 and 608' relatively to a fixed line such as X axis 604 of digitizer 100 may be different. This angle can be entered as a third value within each entry in the matrix discussed above.

Other methods can be designed for detecting the tilt or rotate angles and the angle between the stylus and an axis of the sensor. One such method can use trigonometric computations related to the projections of the tips in order to retrieve the angles.

Referring now back to Figs. 5A-5E. In the trigonometric method for determining the angles, circle 510 is replaced by an ellipse, and the four locations 504, 504', 508, and 508' are required for determining the tilt angle and the rotation angle, and optionally the angle of the stylus relatively to the digitizer sensor.

In order to avoid interference between the three tips, first angle determination tip 504 and second angle determination tip 508 can be routed separately, for example each placed on a separate conductive wire, such that the two conductive wires are isolated from each other and form the position tip.

Alternatively, the stylus may be equipped with one oscillator circuit, which may produce two or three alternating different signals, wherein a first signal is transmitted from the position tip, a second signal is transmitted from the first angle determination tip, and a third signal is transmitted from the first angle determination tip if available. When the stylus is not in contact with sensor 100, only a signal indicating "hovering" is produced, but when the stylus is in contact with sensor 100, it produces alternating contact and hover signals from the position tip and the two angle determination tips.

In yet another alternative, in order to avoid excess energy waste and radiation, the stylus is equipped with a switch or button, such that only if the switch or the button is turned on or constantly pressed, the stylus transmits the signals from the angle determination tips. Thus, only when the switch is turned on and the stylus is in contact with the digitizer, three alternating signals are transmitted alternately, or simultaneously if the stylus comprises three oscillators.

In yet other alternatives, and in order to ensure that the conductive material running through the main axis of the stylus does not mask, hide or conceal the emission from one or more of the transmitters, the three transmitters can be located on or near the perimeter of the stylus and not on its tip, at some height above the tip when the stylus is normal to the sensor. The three transmitters can be located at the same height, i.e., on a plan parallel to the sensor when the stylus is normal to the sensor, or at different heights. Thus the conductive core along the main axis can be eliminated, enabling all three transmitters to be projected upon the sensor. The three projection points enable to univocally determine the location at which the stylus touches the sensor, the tilt angle, the rotation angle and the angle between the stylus and an axis of the sensor. In some embodiments, if there is no pressure, i.e., the stylus does not touch the sensor, all transmitters transmit the same signal, thus making it easier to determine the hover point, for example by determining the center of mass of all projections, which may ne determined by taking into account the location of the projections as well as their intensity or amplitude. Once the tip touches the sensor, or upon special request, for example when the user presses a button indicating he is interested in detecting parameters of the stylus in addition to the touching location, each transmitter transmits a different signal. Each transmitter can transmit a signal amplified by a dedicated power amplifier and a separate filter. Alternatively, all transmitters can receive the same signal as amplified by the same amplifier, and use different filters. A drawback of this method is that the tip position cannot be determined directly, but rather as the center of mass of the projections of the three transmitters. Another drawback of this method is that since all transmitters are farther from the sensor than the tip of the stylus, the height above the sensor at which a hover signal is received by the transmitter, is smaller. In other words, in order to detect hovering, the user has to hold the stylus closer to the sensor than in cases in which there is a transmitter at the tip.

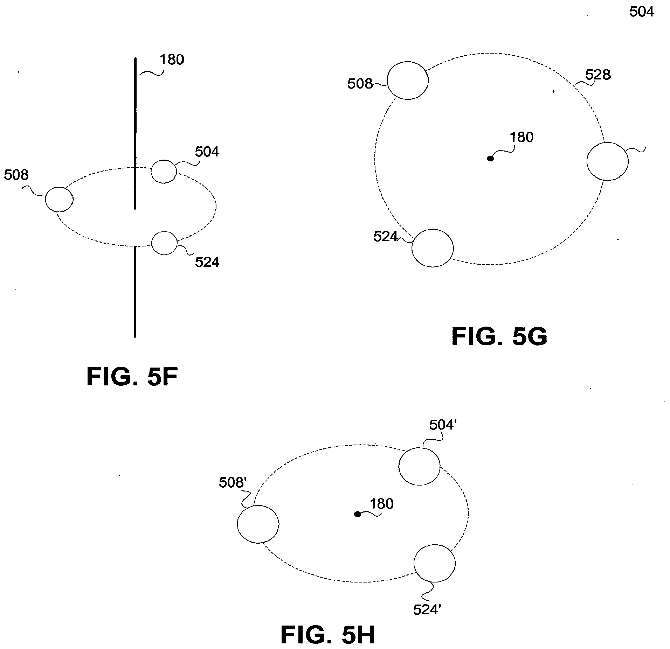

Referring now to Figs. 5F-5H, showing views or projections of a stylus with three transmitters, none of which is located at or near the stylus tip. Fig. 5F is a perspective view of the stylus main axis 180, and three transmitters 504 and 508 as in Fig. 5A, and a third non-tip transmitter 524. In some embodiments, transmitters 504, 508 and 512 are located on a plan parallel to the sensor when the stylus main axis is normal to the sensor. In such arrangement, transmitters 504, 508 and 512 can be located on the rim or internally to a circle made of non-conductive material surrounding the main axis of the stylus, which may also be made of non-conductive material. Alternatively, the transmitters can be located on a non-conductive ring placed around the main axis of the stylus. In some embodiments, transmitters 504, 508 and 524.

Fig. 5G is a top view of the three transmitters, when the stylus main axis is normal to the sensor, and wherein the three transmitters are located at 120° to each other. Fig. 5H is a top view of the three transmitters, when the stylus is tilted relatively to the sensor, and not normal to it.

It will be appreciated that each projection of a transmitter upon the sensor can be associated with a particular transmitter, for example by frequency, phase, or time.

The usage parameters of the stylus can be determined from the inter-relationships between the locations of the transmitters in the three dimensional space which are known form the design of the stylus, and the inter-relationships between the projections of the transmitters. The parameters, including the tilt and rotate angles of the stylus, and the rotation of the stylus around its main axis can be determined using geometries or trigonometrics of the inter-relationships, or using look up tables whose axes correspond to absolute or relative displacements between the projections of the transmitters, and whose entries correspond to the required angles.

In the designs shown in Fig. 5F-5H the three transmitters are located at the same height, i.e., on a plan parallel to the sensor when the stylus main axis is normal to the sensor, at the same distance from the stylus main axis, and at 120° to each other. However, it will be appreciated that this is not necessary. The transmitters can be located at different heights, different distances from the stylus main axis, or at angles other than 120° to each other. However, such arrangements may involve more complex computations.

It will be appreciated that Figs. 5B, 5D, 5E, 5G and 5H as top views, also illustrate the projections of a stylus with three tips upon a sensor.

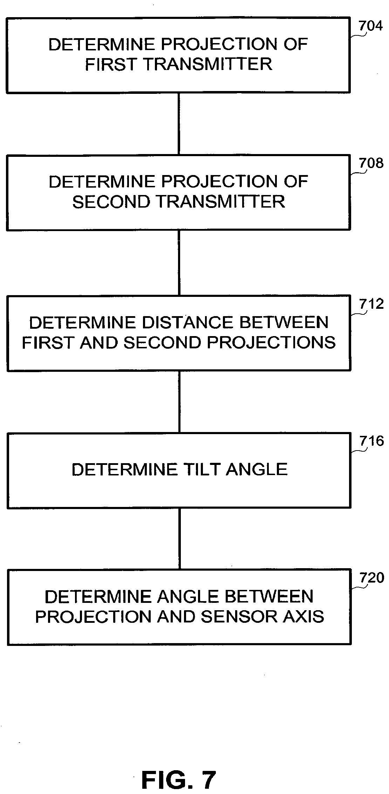

Referring now to Fig. 7, showing a flowchart of the main steps in a method for determining the tilt angle of a stylus.

On step 704, the projection of the position tip upon the sensor is determined, and on step 708 the projection of a tilt tip or an angle determination tip is determined. It will be appreciated by a person skilled in the art that at least one of the tips transmits a hover signal, since at most one end of the stylus touches the sensor.

On step 712 the distance between the projections of the first and the second transmitters is determined.

On step 716, the tilt angle of the stylus is determined as follows: the distance between the projections, as determined on step 712 is divided by the distance along the stylus between the two transmitters. Then the inverse cosine of this ratio is determined, which yields the tilt angle.

In alternative embodiments, the height of the two transmitters above the sensor is determined, for example according to the intensity of the signal or radiation measured at sensor 100. Dividing the height difference by the distance between the transmitters along the stylus yields the sine of the tilt angle, from which the tilt angle itself can be determined.

On optional step 720, the angle between the segment connecting the projections of the two tips and one of the axes of the sensor is determined as detailed above.

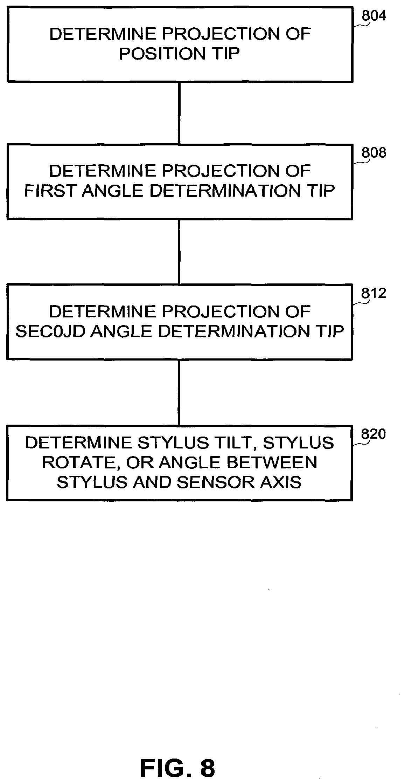

Referring now to Fig. 8, showing a flowchart of the main steps in a method for determining the tilt angle or rotation angle of a stylus, or the angle between the stylus and an axis of the digitizer.

On step 804, the projection of a first transmitter is determined. The first transmitter can be located at or near the tip of the stylus, in which case the projection is the touch point or hover point of the tip on the sensor. Alternatively, the first transmitter can be located further higher on the stylus, i.e. farther from the sensor.

On step 808 the projection of the first angle determination tip upon the sensor is determined. It will be appreciated by a person skilled in the art that at least one of the tips transmits a hover signal, since at most one end of the stylus touches the sensor.

On step 812 the projection of the second angle determination tip upon the sensor is determined. It will be appreciated by a person skilled in the art that typically at least the first and second angle determination tips transmit a hover signal, since at most one end of the stylus touches the sensor.

In an embodiment in which the first transmitter is not located on the tip of the stylus, the first tip, the first angle determination tip, and the second angle determination tip can be located on a plan parallel to the ground when the stylus is normal to the sensor, i.e., on the same height relatively to the tip.

On step 816 the stylus tilt angle, rotation angle, or the angle between the stylus and a line across the digitizer is determined, based upon the projections of the three transmitters, whether one of the transmitters is located on the tip of the stylus or not. It will be appreciated that different computations are required at each case.

If one transmitter is on the tip of the stylus, the angles can be determined according to a matrix or another look up table, for example a matrix whose rows and columns refer to the coordinates of each of the angle determination tips relatively to position tip. Alternatively, the angles can be determined using trigonometric calculations.

It will be appreciated that the steps of the method of Fig. 7 and Fig. 8 can be performed repeatedly, and used for example for graphic purposes. However, the method can be performed only upon specific demand, such as a request from the underlying computing platform, or from a user of the stylus, expressed for example by pressing a button on the stylus or activating a specific mode.

The steps of the method of Fig. 7 and Fig. 8 can be performed by digital unit 108 of the digitizer, or by host 112 of Fig. 1.

The description above teaches the usage of a second tip or transmitter on a computer stylus, in addition to the transmitter located at or near its tip, in order to detect the tilt angle of the stylus. A third tip or transmitter enables the determination of further parameters, including the rotate or roll of the stylus around its main axis or symmetry axis, or the angle between the stylus and an axis of the sensor or digitizer.

In some alternative embodiments, a gyroscope installed on the stylus can be used for determining the tilt and rotate angle of the stylus. Such a gyroscope will provide the tilt angle relatively to the earth and not to the sensor. Therefore, if the sensor is not assumed to be positioned in parallel to the ground, second and third gyroscopes can be used for determining the tilt angle relatively to the sensor.

Yet another embodiment uses a compartment half full with liquid, and an optic mechanism comprising two optic sensors at substantially opposite sides of the compartment for determining the tilt angle of the stylus relatively to the ground. A further compartment installed on the sensor can provide for determining the tilt of the stylus relatively to the sensor.

It should be further understood that the individual features described hereinabove can be combined in all possible combinations and sub-combinations to produce exemplary embodiments of the invention. Furthermore, not all elements described for each embodiment are essential. In many cases such elements are described so as to describe a best more for carrying out the invention or to form a logical bridge between the essential elements. The examples given above are exemplary in nature and are not intended to limit the scope of the invention which is defined solely by the following claims.

The terms "include", "comprise" and "have" and their conjugates as used herein mean "including but not necessarily limited to".

## Claims

1. A digitizer controller comprising:
a circuit configured to:
sample outputs from a plurality of column sensor lines and from a plurality of row sensor lines of a digitizer sensor to detect a first signal emitted from a first transmitter and a second signal emitted from a second transmitter, wherein the first transmitter and the second transmitter are fixed on a stylus and wherein the first transmitter is displaced from the second transmitter by a pre-defined distance;
determine based on the outputs a first area on the digitizer sensor that received the first signal and a second area on the digitizer sensor that received the second signal;
select first coordinates within the first area;
select second coordinates within the second area;
determine distance along the digitizer sensor between the first coordinates and the second coordinates; and
determine angle of the stylus with respect to the digitizer sensor based on comparing the pre-defined distance to the distance determined along the digitizer sensor.

2. The digitizer controller of claim 1, wherein both the first signal and the second signal are detected from same outputs.

3. The digitizer controller of claim 1, wherein the first signal is detected from first outputs and the second signal is detected from second outputs, the second outputs sampled after the first outputs.

4. The digitizer controller of any one of claims 1-3, wherein at least one of the first signal and the second signal is modulated with information.

5. The digitizer controller of any one of claims 1-4, wherein the circuit is configured to determine the angle based on an arcsine of the distance determined along the digitizer sensor over the pre-defined distance.

6. The digitizer controller of any one of claims 1-5, wherein the circuit is configured to determine angle of a projection of the stylus on the digitizer sensor with respect to one of the row and column direction based on comparing slope defined by the first coordinates and the second coordinates.

7. The digitizer controller of any one of claims 1-6, wherein the first signal is transmitted from a tip of the stylus and wherein the circuit is configured to determine position of the tip based on the first coordinates, wherein the circuit is configured to distinguish between the first signal transmitted from the tip and the second signal and wherein the circuit is configured to recognize a gesture performed with the stylus based on both the position of the tip and the angle of the stylus with respect to the digitizer sensor.

8. The digitizer controller of any one of claims 1-7, wherein the circuit is configured to track the angle of the stylus over time and to verify identify of a user manipulating the stylus to provide a signature based on the signature and the angle tracked.

9. The digitizer controller of any one of claims 1-8, wherein the circuit is configured to detect from the outputs a third signal emitted from a third transmitter, the third transmitter fixed onto the stylus and displaced from the second transmitter in a direction perpendicular to a longitudinal axis of the stylus by a second pre-defined distance, wherein the circuit is configured to determine based on the outputs, third coordinates on the digitizer sensor at which the third signal is received, and wherein the circuit is configured to track rotation of the stylus about the longitudinal axis based on comparing changes in distance between the second coordinate and the third coordinates over time.

10. The digitizer controller of any one of claims 1-9, wherein the circuit is configured to determine based on the outputs first amplitudes in the first area and second amplitudes in the second area and to determine angle of the stylus with respect to the digitizer sensor based on comparing a feature of the first amplitudes with a feature of the second amplitudes.

11. The digitizer controller of any one of claims 1-10, wherein circuit is configured to determine angle of the stylus with respect to the digitizer sensor based on comparing size of the first area to size of the second area.

12. A digitizer controller comprising:
a circuit configured to:
sample outputs from a plurality of column sensor lines and from a plurality of row sensor lines of a digitizer sensor to detect a first signal emitted from a first transmitter associated with a tip of a stylus and a second signal emitted from a second transmitter, wherein the first transmitter and the second transmitter are fixed on the stylus and wherein the first transmitter is displaced from the second transmitter by a pre-defined distance;
distinguish between the first signal emitted from the tip of the stylus and the second signal;
determine based on the outputs a first area on the digitizer sensor that received the first signal and a second area on the digitizer sensor that received the second signal;
select first coordinates within the first area;
select second coordinates within the second area;
determine distance along the digitizer sensor between the first coordinates and the second coordinates; and
determine angle of the stylus with respect to the digitizer sensor based on comparing the pre-defined distance to the distance determined along the digitizer sensor.

13. The digitizer controller of claim 12, wherein both the first signal and the second signal are detected from same outputs.

14. The digitizer controller of claim 12 or claim 13, wherein at least one of the first signal and the second signal is modulated with information.

15. The digitizer controller of any one of claims 12-14, wherein the circuit is configured to detect from the outputs a third signal emitted from a third transmitter, the third transmitter fixed onto the stylus and displaced from the second transmitter in a direction perpendicular to a longitudinal axis of the stylus by a second pre-defined distance, wherein the circuit is configured to determine based on the outputs, third coordinates on the digitizer sensor at which the third signal is received and wherein the circuit is configured to track rotation of the stylus about the longitudinal axis based on comparing changes in distance between the second coordinate and the third coordinates over time.
